# FASCICULE DE BREVET EUROPEEN

(11) **EP 2 843 420 B1**
(45) Date de publication et mention de la délivrance du brevet: **25.05.2016**
(21) Numéro de dépôt: 14182822.8
(22) Date de dépôt: 29.08.2014
(51) Int. Cl.: G01P 5/165, G01P 13/02, B64D 15/00, G01K 13/02, B64D 43/02, H05B 6/70, H05B 6/80

(54) **Sonde de mesure aérodynamique pour aéronef**
Aerodynamische Messsonde für Luftfahrzeug
Aerodynamic measurement probe for aircraft

(30) Priorité: 30.08.2013 FR 1302016
(43) Date de publication de la demande: 04.03.2015
(73) Titulaire: Thales, 92200 Neuilly Sur Seine (FR)
(72) Inventeur: Leblond, Henri, 78000 VERSAILLES (FR); Mandle, Jacques, 07130 SAINT PERAY (FR)
(74) Mandataire: Collet, Alain

(56) Documents cités:
- EP-A2- 2 072 981
- WO-A2-2011/003963
- DE-A1-102008 033 025
- FR-A1- 2 823 846
- FR-A1- 2 986 779

## Description

L'invention concerne une sonde de mesure aérodynamique destinée à équiper un aéronef.

Le pilotage de tout aéronef nécessite de connaître le module de sa vitesse relative plus exactement de sa vitesse conventionnelle par rapport à l'air, c'est-à-dire au vent relatif. Cette vitesse est déterminée à l'aide de sondes de mesure de la pression statique Ps et de la pression totale Pt. Pt - Ps fournit le module de ce vecteur vitesse conventionnelle. Ce paramètre aérodynamique permet de déterminer le module de la vitesse de tout aéronef, tel que par exemple un avion, un hélicoptère ou un engin non habité tel qu'un drone.

La mesure de la pression totale Pt se fait habituellement à l'aide d'un tube dit de Pitot. Il s'agit d'un tube ouvert à l'une de ses extrémités et obstrué à l'autre. L'extrémité ouverte du tube fait sensiblement face à l'écoulement.

Le filet d'air situé en amont du tube est progressivement ralenti jusqu'à atteindre une vitesse quasi nulle à l'entrée du tube. Le ralentissement de la vitesse de l'air augmente la pression de l'air. Cette pression augmentée forme la pression totale Pt de l'écoulement d'air : à l'intérieur du tube de Pitot, on mesure la pression d'air qui y règne.

La vitesse ainsi déterminée peut aussi être exprimée en nombre de Mach M, c'est-à-dire son rapport à la vitesse du son dans l'air entourant l'aéronef. Cette vitesse du son est elle-même fonction de la température statique de l'air.

A bord d'un aéronef rapide, la température statique de l'air environnant est très difficile à mesurer voire impossible. Il faudrait placer un capteur de température au fond d'un trou sensiblement perpendiculaire à la surface externe de l'aéronef dans une zone où la surface externe est sensiblement parallèle à l'écoulement d'air avec une vitesse locale voisine de la vitesse amont. Ce capteur de température serait notablement perturbé par la température de la surface externe qui risquerait d'altérer la mesure de température statique. On préfère donc mesurer la température totale Tt de l'écoulement d'air en plaçant le capteur de température dans l'écoulement d'air au moyen d'un tube semblable à un tube de Pitot.

La température totale est fonction de la température statique et de la vitesse de l'écoulement toujours exprimée en nombre de Mach M.

Les tubes de Pitot et les sondes de mesure de température totale présentent tous deux un tube faisant face à l'écoulement. En fonction des conditions atmosphériques dans lesquelles peut évoluer l'aéronef, il est prévu de piéger l'eau susceptible de pénétrer dans le tube. Des trous de purge permettent d'évacuer l'eau ainsi piégée. Pour pouvoir fonctionner en conditions givrantes, le tube est réchauffé électriquement. Le réchauffage évite que le tube ne soit obstrué par de la glace, lors des vols en conditions givrantes. Le réchauffage permet également d'éviter la formation et l'accumulation de glace dans les trous de purge ce qui nuirait à leur rôle d'évacuation de l'eau pénétrant dans le tube en vol ou au sol. Le dimensionnement du réchauffage est notamment réalisé en fonction des conditions atmosphériques que la sonde peut être amenée à rencontrer, en fonction de la quantité d'eau que la sonde est susceptible d'ingérer et en fonction des échanges thermiques avec l'écoulement que la sonde peut subir.

Le document EP 2 072 981 A2 décrit une sonde de température totale comprenant une source micro-ondes disposée au pied de la sonde et émettant en direction de l'entrée du tube un rayonnement permettant d'agiter les molécules d'eau en amont de la sonde. La source micro-ondes ne réchauffe pas la sonde elle-même.

La puissance électrique nécessaire au réchauffage d'une telle sonde peut atteindre plusieurs centaines de watts.

L'invention vise à proposer une nouvelle sonde de mesure aérodynamique à consommation électrique réduite tout en conservant le même niveau de performance. L'invention cherche à limiter la pénétration de particules de glace ou d'eau liquide surfondue dans le tube. Ainsi il est possible de réduire très nettement le réchauffage.

A cet effet, l'invention a pour objet une sonde de mesure aérodynamique destinée à équiper un aéronef, la sonde comprenant un tube destiné à faire sensiblement face à un écoulement d'air longeant l'aéronef, le tube étant ouvert à une première de ses extrémités, des moyens pour émettre une onde électromagnétique dirigée vers une zone libre située dans le prolongement du tube du coté de l'extrémité ouverte, l'onde électromagnétique permettant de réchauffer de l'eau susceptible de se situer dans la zone libre.

L'onde électromagnétique est dirigée vers la zone libre par l'intérieur du tube. Cette disposition permet également de réchauffer les parois du tube et permet de supprimer d'éventuelles particules de glace (ou d'eau surfondue) ayant pu pénétrer à l'intérieur du tube. Le réchauffage des parois du tube permet de se passer de résistance chauffante intégrée aux parois du tube, ou tout au moins de limiter son utilisation. La sonde peut comprendre des moyens de mesure de la température et/ou de mesure de pression. Les moyens pour émettre l'onde électromagnétique peuvent être disposés à l'intérieur du tube ou à l'extérieur tout en conservant un trajet de l'onde électromagnétique par l'intérieur du tube en amont de la zone libre.

L'invention sera mieux comprise et d'autres avantages apparaîtront à la lecture de la description détaillée d'un mode de réalisation donné à titre d'exemple, description illustrée par le dessin joint dans lequel :
la figure 1 représente une sonde de mesure aérodynamique comprenant des moyens de mesure de pression totale ;
la figure 2 représente une sonde de mesure aérodynamique comprenant des moyens de mesure de température totale ;
la figure 3 représente une sonde de mesure aérodynamique combinant des moyens de mesure de pression totale et de température totale ;
la figure 4 représente une sonde de mesure aérodynamique mobile ;
la figure 5 représente une variante non revendiquée de sonde de mesure aérodynamique comprenant des moyens de mesure de pression totale.

Par souci de clarté, les mêmes éléments porteront les mêmes repères dans les différentes figures.

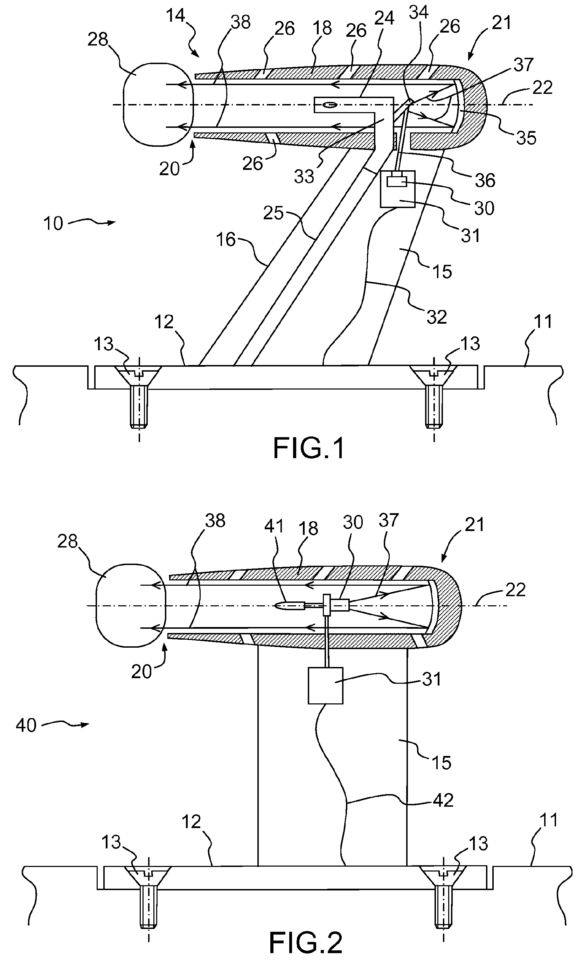

La sonde 10 représentée sur la figure 1 permet de mesurer la pression totale d'un écoulement d'air circulant le long de la surface externe 11 d'un aéronef. La sonde 10 comprend une embase 12 destinée à être fixée sur la surface externe 11, par exemple au moyen de vis 13. L'embase 11 est essentiellement formée d'une plaque fixée dans le prolongement de la surface externe 11. La sonde 10 comprend essentiellement un tube de Pitot 14 solidaire d'un mât 15 reliant le tube de Pitot 14 à l'embase 12. On trouve des sondes de mesures aérodynamiques disposées à différents endroits d'un aéronef, comme par exemple au niveau du nez de l'aéronef fixés à sa surface externe, souvent appelée peau de l'aéronef. On trouve également des sondes dans l'entrée d'air d'un moteur de l'aéronef. L'invention peut être mise en oeuvre pour tout type de sonde quel que soit son emplacement sur la surface externe de l'aéronef.

Le mât 15 a par exemple un profil d'aile possédant un plan de symétrie, situé dans le plan de la figure. Le profil de l'aile perpendiculairement à son bord d'attaque 16 est par exemple un profil à faible survitesse. Dans l'exemple représenté, le bord d'attaque est sensiblement rectiligne. Il est bien entendu que d'autres formes de mât peuvent être utilisées pour mettre en oeuvre l'invention.

Le tube de Pitot 14 comprend un tube 18 s'étendant entre deux extrémités, l'une 20 ouverte et l'autre 21 obstruée le tube s'étend sensiblement de façon rectiligne selon un axe 22 entre ses deux extrémités 20 et 21.

La sonde 10 est positionnée sur la surface externe 11 de l'aéronef de façon à faire sensiblement face à l'écoulement d'air circulant le long de l'embase 12 lorsque l'aéronef est en vol. Autrement dit, la sonde est configurée pour réaliser une mesure aérodynamique d'un écoulement d'air longeant l'embase 12. Un filet d'air de l'écoulement situé en amont du tube est progressivement ralenti jusqu'à atteindre une vitesse quasi nulle à l'entrée du tube. Le ralentissement de la vitesse de l'air augmente la pression de l'air. Cette pression augmentée forme la pression totale Pt de l'écoulement d'air.

Le tube de Pitot 14 comprend une prise de pression 24 disposée à l'intérieur du tube 18 sur l'axe 22 entre les deux extrémités 20 et 21. La prise de pression 24 mesure la pression régnant à l'intérieur du tube 18. La prise de pression 24 est reliée à un capteur de pression, non représenté, qui peut être disposé à l'intérieur de la surface externe 11 de l'aéronef. Dans ce cas, la prise de pression 24 est reliée au capteur de pression par l'intermédiaire d'un canal aéraulique 25 disposé dans le mât 15 entre le tube 18 et l'embase 12.

Le tube de Pitot 14 peut comprendre quelques trous de purge 26 disposés en traversée du tube 18 et permettant d'évacuer d'éventuelles particules solides ou liquides susceptibles de pénétrer à l'intérieur du tube 18.

Selon l'invention, la sonde 10 comprend des moyens pour émettre une onde électromagnétique dirigée vers une zone libre 28 située dans le prolongement du tube 18 du coté de l'extrémité ouverte 20, l'onde électromagnétique permettant de réchauffer l'eau située dans la zone libre. L'eau à réchauffer peut être constituée de gouttelettes d'eau liquide, à l'état surfondu ou pas, ou de cristaux de glace présents dans l'atmosphère, dans un nuage. L'onde électromagnétique a avantageusement une puissance suffisante pour réchauffer ces gouttelettes d'eau et transformer les cristaux de glace en eau liquide en amont de l'extrémité 20. Dans les cas sévères de conditions givrantes, l'écoulement peut contenir des gouttelettes d'eau surfondue. L'onde électromagnétique réchauffe alors les gouttelettes d'eau surfondue, les transformant en gouttelettes d'eau liquide normale qui ne risque pas de se solidifier brutalement lors du choc avec une partie de la sonde. On peut ainsi réduire dans tous les cas la puissance nécessaire au réchauffage de la sonde. Dans de mêmes conditions atmosphériques, on a constaté qu'en mettant en oeuvre l'invention, la somme des puissances nécessaires à l'alimentation des moyens pour émettre une onde électromagnétique et à un réchauffage résiduel de la sonde reste inférieure à la puissance nécessaire à un réchauffage classique nécessaire dans une sonde sans moyens pour émettre une onde électromagnétique.

De plus, à l'intérieur d'un tube de Pitot classique, un piège à eau, est disposé permettant d'empêcher l'eau pénétrant dans le tube de pénétrer plus profondément dans les canaux aérauliques. Le piège à eau est relié à un trou de purge traversant une paroi du tube et permettant d'évacuer l'eau ainsi piégée. En mettant en oeuvre l'invention, du fait de la moindre pénétration d'eau dans le tube, il est possible de réduire significativement les dimensions du piège à eau et du trou de purge.

Toute onde électromagnétique transportant de l'énergie en quantité suffisante pour réchauffer de l'eau peut être mise en oeuvre dans l'invention. La longueur d'onde de l'onde électromagnétique est avantageusement choisie pour exciter principalement les molécules d'eau de façon à permettre leur vaporisation. On peut par exemple utiliser une onde électromagnétique dans une bande de fréquence utilisée dans les systèmes radar. Les moyens pour émettre une onde électromagnétique peuvent être situés à l'intérieur ou à l'extérieur de la sonde 10 à proximité immédiate de celle-ci. Ces moyens sont dédiés au réchauffage de l'eau susceptible de se situer dans la zone libre 28.

Des essais réalisés dans les locaux de la demanderesse ont montré qu'une onde électromagnétique lumineuse infrarouge est particulièrement bien adaptée. Une onde incohérente peut être mise en oeuvre dans l'invention. Avantageusement, l'onde électromagnétique est un faisceau laser que l'on peut facilement collimater vers la zone libre 28.

Avantageusement, les moyens pour émettre une onde électromagnétique comprennent une diode laser 30 émettant un faisceau laser et des moyens de focalisation du faisceau laser vers la zone 28.

Dans la variante représentée sur la figure 1, la diode laser 30 et des moyens d'alimentation 31 de la diode 30 sont disposés dans le mât 15. Un câble électrique 32 raccorde les moyens d'alimentation 31 à un connecteur électrique (non représenté) de la sonde 10 disposé au niveau de l'embase 12 et permettant à l'aéronef d'alimenter la sonde 10 électriquement. Le connecteur électrique peut aussi alimenter des moyens de réchauffage de la sonde venant en complément des moyens pour émettre une onde électromagnétique.

Dans l'exemple représenté, les moyens de focalisation comprennent un miroir plan 34 et un miroir concave 35 disposés tous deux à l'intérieur du tube 18. Le miroir plan 34 est par exemple fixé sur un support 33 de la prise de pression 24 et le miroir concave 35 est par exemple fixé à l'extrémité obstruée 21 du tube 18. Le faisceau émis par la diode laser 30 est renvoyé vers le miroir concave 35 par le miroir plan 34. Le miroir concave 35 dirige le faisceau vers la zone libre 28. Sur la figure 1, entre la diode 30 et le miroir plan 34, le faisceau est représenté par un tracé 36. Entre le miroir plan 34 et le miroir concave 35, le faisceau est représenté par un tracé 37 et entre le miroir concave 35 et la zone libre 28, le faisceau est représenté par un tracé 38.

Le tracé 38 longe les parois internes du tube 18. Dans l'exemple représenté, le tracé 38 est parallèle à l'axe 22 du tube 14. Il est également possible de désaxer le tracé 38, par exemple pour prendre en compte des contraintes de conception de la sonde 10, contraintes notamment dues à la présence de la prise de pression 24 et son raccordement aéraulique à l'intérieur du tube 18. Sur tout son trajet, le faisceau peut contribuer à réchauffer les parois internes du tube 18, notamment entre le miroir concave 35 et la zone libre 28. De façon classique, le réchauffage du tube 18 est réalisé au moyen d'une résistance chauffante enroulée sur les parois internes du tube. En mettant en oeuvre l'invention, il est possible de se passer de cette résistance en n'utilisant que le faisceau pour réchauffer le tube 18. Alternativement, il est possible de prévoir un réchauffage résiduel du tube 18 en enroulant une résistance le long des parois internes du tube 18. Cette résistance sera de puissance notablement moins importante que celle d'un tube de Pitot classique pour deux raisons : tout d'abord, du fait de l'éventuelle moindre présence d'eau dans le tube 18 et ensuite du fait du réchauffage du tube 18 obtenu par les moyens pour émettre une onde électromagnétique. Cette résistance de plus faible puissance permet de réduire ses dimensions et par conséquent de réduire la section du tube 18. Un tube de section plus faible présente une surface externe plus faible, ce qui permet de réduire l'échange thermique qu'il subit dans l'écoulement. La réduction de cet échange thermique contribue encore à réduire la puissance électrique consommée par la sonde.

La figure 2 représente une sonde 40 permettant de mesurer la température totale d'un écoulement d'air circulant le long de la surface externe 11 d'un aéronef. On retrouve dans la sonde 40, l'embase 12 fixée sur la surface externe 11, au moyen des vis 13, le tube 18 et le mât 15 reliant le tube 18 et l'embase 12. Comme précédemment, le tube 18 peut comprendre quelques trous de purge 26 disposé en traversé du tube 18 et permettant d'évacuer d'éventuelles particules susceptibles de pénétrer à l'intérieur du tube 18.

La sonde 40 comprend un capteur de température 41 disposé à l'intérieur du tube 18 par exemple sur l'axe 22 entre les deux extrémités 20 et 21. Le capteur de température 41 mesure la température régnant à l'intérieur du tube 18. La température mesurée est représentative de la température totale de l'écoulement. Le capteur de température 41 délivre une mesure, par exemple sous forme d'un signal électrique, qu'il transmet à l'aéronef par l'intermédiaire d'un câble 42 disposé dans le mât 15.

La sonde 40 comprend, comme la sonde 20, des moyens pour émettre une onde électromagnétique dirigée vers la zone libre 28. Comme pour la sonde 20, la sonde 40 peut comprendre une diode laser 30 disposée dans le mât 15. A titre d'alternative, comme représenté sur la figure 2, la diode 30 peut être disposée à l'intérieur du tube 18. La diode 30 peut être disposée sur l'axe 22 ou désaxée notamment pour faciliter son raccordement aux moyens d'alimentation 31. La disposition de la diode 30 à l'intérieur du tube peut également être mise en oeuvre dans la sonde 10. La diode 30 dirige le faisceau qu'elle émet en direction de l'extrémité obstruée 21 du tube 18 selon le tracé 37. On retrouve le miroir concave 35 fixé à l'extrémité obstruée 21. Le miroir 35 reçoit le faisceau issu de la diode 30 et le renvoie vers la zone libre 28 de façon sensiblement parallèle à l'axe 22 du tube 18 selon le tracé 38. On retrouve également dans la sonde 40 les moyens d'alimentation 31 de la diode 30 disposés dans le mât 15. Le signal issu du capteur de température 41 peut transiter par les moyens d'alimentation 31. L'énergie électrique nécessaire aux moyens d'alimentation 31 peut transiter par le câble 42.

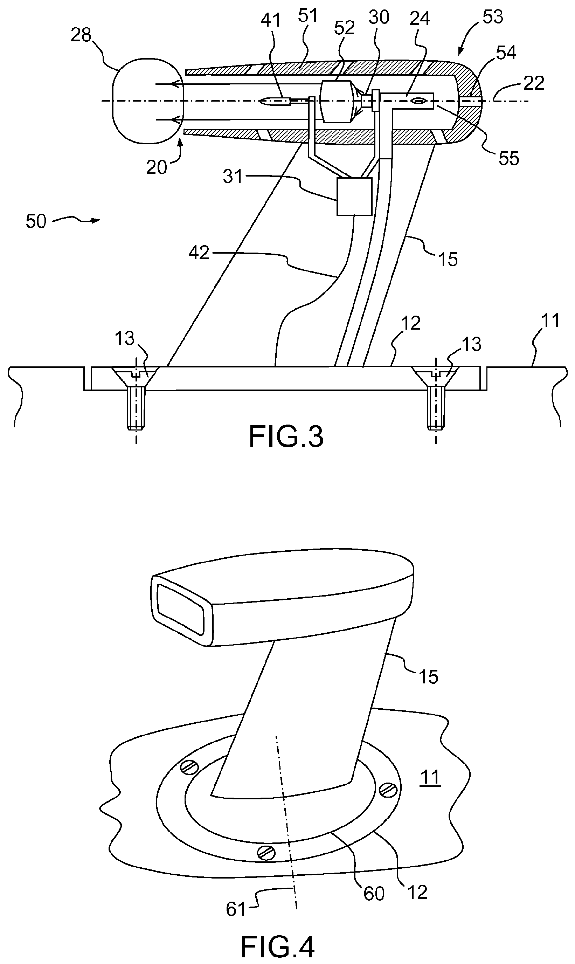

La figure 3 représente une sonde 50 permettant de mesurer à la fois la température totale et la pression totale d'un écoulement d'air.

Un tube 51, diffère légèrement du tube 18. On retrouve à l'intérieur du tube 51, le capteur de température 41, la prise de pression 24 et la diode 30. Le capteur de température 41 est situé plus près de l'extrémité ouverte 20 que la prise de pression 24. La diode 30 et les moyens de focalisation du faisceau lumineux issu de la diode 30 sont avantageusement disposés entre le capteur de température 41 et la prise de pression 24. Les moyens de focalisation comprennent par exemple une lentille 52 permettant de diriger le faisceau issu de la diode vers la zone libre 28.

Avantageusement, la pression totale est mesurée au niveau d'un point d'arrêt fluide. Le principe d'une telle mesure est décrit dans la demande de brevet FR 2 823 846 déposée le 24 avril 2001 au nom de la demanderesse. Le tube 51 comprend une extrémité ouverte 20 destinée à faire face à l'écoulement dans lequel la sonde 50 est située. Le tube 51 comprend une autre extrémité 53 opposée à l'extrémité 20 et présentant une ouverture 54 disposée suivant l'axe 22 du tube 51. L'ouverture 54 est plus petite que l'ouverture de l'extrémité ouverte 20 mais permet néanmoins une circulation d'air à l'intérieur du tube 51.

Plusieurs filets d'air circulent dans le tube 51 annulairement autour d'un corps centré sur l'axe 22 et formé ici par la lentille 52 et plus généralement par les moyens de focalisation du faisceau laser. Les différents filets d'air se rejoignent et se ralentissent mutuellement dans une zone 55 située à l'intérieur du tube 51 au voisinage de l'ouverture 54. Le ralentissement mutuel des filets d'air dans la zone 55 forme un point d'arrêt fluide au niveau duquel on peut mesurer la pression totale de l'écoulement ou tout au moins une valeur de pression représentative de la pression totale. La prise de pression 24 est située dans la zone 55 pour mesurer cette pression d'arrêt.

L'extrémité 53 est obstruée partiellement. La forme intérieure du tube 51 au voisinage de l'extrémité 53 est définie de façon à mettre en contact les filets d'air circulant autour de la lentille 52. Les différents filets d'air se font sensiblement face dans la zone 55 de façon à former le point d'arrêt fluide.

Les sondes 10, 40 et 50 peuvent être fixes par rapport à la surface externe de l'aéronef. Pour ce faire, le mât 15 est directement fixé à l'embase 12. Alternativement, une sonde selon l'invention peut être mobile en rotation de façon à permettre son alignement dans l'axe de l'écoulement. On obtient ainsi une meilleure mesure aérodynamique en maintenant l'axe 22 dans l'axe de l'écoulement même lorsque l'incidence locale de la sonde est importante.

La figure 4 représente une sonde mobile comprenant une liaison pivot 60 disposée entre le mât 15 et l'embase 12. La liaison pivot 60 permet au mât 15 de tourner librement autour d'un axe 61 perpendiculaire à l'embase 12. La sonde comprend une partie mobile formée par le mât 15 et le tube 18 ou 51 qui y est fixé.

L'orientation de la partie mobile de la sonde peut se faire naturellement dans l'axe de l'écoulement grâce au profil du mât 15 en forme d'aile. Il est également possible de motoriser la liaison pivot pour obtenir un meilleur alignement notamment aux faibles vitesses de l'écoulement par rapport à la sonde.

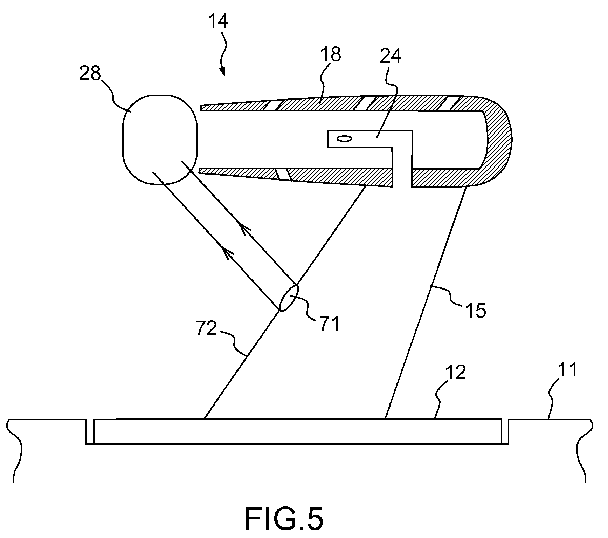

La figure 5 représente une sonde de mesure aérodynamique 70 semblable à celle de la figure 1. La sonde 70 comprend un tube 18 équipé de sa prise de pression 24. Le tube 18 est solidaire du mât 15 reliant le tube 18 à l'embase 12. A la différence de la sonde 10, le cheminement du rayonnement électromagnétique permettant de réchauffer de l'eau susceptible de se situer dans la zone libre 28 ne se fait pas par l'intérieur du tube 18 mais par l'extérieur. Cette variante, non revendiquée, peut bien entendu être mise en oeuvre pour une sonde équipée d'un capteur de température 41.

L'onde électromagnétique est dirigée vers la zone libre 28 par l'extérieur du tube 18 en traversant une fenêtre 71 disposée sur une surface extérieure 72 du mat 15. A titre d'alternative, la fenêtre 71 peut être disposée sur une surface extérieure de l'embase 12.

Les moyens pour émettre l'onde électromagnétique peuvent être situés directement derrière la fenêtre 71 à l'intérieur du mât 15. Cette configuration est facile à mettre en oeuvre par exemple lorsque les moyens pour émettre l'onde électromagnétique comprennent la diode 30. Alternativement il est possible de déporter les moyens pour émettre l'onde électromagnétique à l'intérieur de la surface extérieure 11 et de guider l'onde au moyen d'un guide d'onde. Cette configuration est par exemple utilisable avec un guide d'onde prélevant de l'énergie d'une source microonde installée à bord de l'aéronef. Cette source est par exemple celle d'un radar embarqué.

## Revendications

1. Sonde de mesure aérodynamique destinée à équiper un aéronef, la sonde (10, 40, 50, 70) comprenant un tube (18 ; 51) destiné à faire sensiblement face à un écoulement d'air longeant l'aéronef, le tube (18) étant ouvert à une première (20) de ses extrémités (20, 21 ; 53), des moyens (30) pour émettre une onde électromagnétique dirigée vers une zone libre (28) située dans le prolongement du tube (18 ; 51) du coté de l'extrémité ouverte (20), l'onde électromagnétique permettant de réchauffer de l'eau susceptible de se situer dans la zone libre (28), **caractérisée en ce que** l'onde électromagnétique est dirigée vers la zone libre (28) par l'intérieur du tube (18 ; 51).

2. Sonde selon la revendication 1, **caractérisée en ce qu'**elle comprend des moyens de mesure de température (41).

3. Sonde selon l'une des revendications précédentes, **caractérisée en ce qu'**elle comprend des moyens de mesure de pression (24).

4. Sonde selon l'une des revendications précédentes, **caractérisée en ce que** l'onde électromagnétique est un faisceau laser (36, 37, 38).

5. Sonde la revendication 4, **caractérisée en ce que** les moyens pour émettre une onde électromagnétique comprennent une diode laser (30) émettant le faisceau laser (36, 37, 38) et des moyens de focalisation (34, 35 ; 52) du faisceau laser (36, 37, 38).

6. Sonde la revendication 5, **caractérisée en ce que** la diode (30) est disposée à l'intérieur du tube (18).

7. Sonde selon l'une quelconque des revendications 4 à 6, **caractérisée en ce que** le tube (18) est obstrué à une seconde (21) de ses extrémités (20, 21), et **en ce que** les moyens de focalisation (34, 35) du faisceau laser (36, 37, 38) comprennent un miroir concave (35) disposé dans le tube (18) et fixé à l'extrémité obstruée (21).

8. Sonde selon l'une quelconque des revendications 4 à 6, **caractérisée en ce que** le tube (51) est partiellement obstrué à une seconde (21) de ses extrémités (20, 21), **en ce que** les moyens de focalisation (52) du faisceau laser forment un corps centré sur un axe (22) du tube (51), **en ce que** plusieurs filets d'air peuvent circuler dans le tube (51) angulairement autour des moyens de focalisation (52), **en ce qu'**une forme intérieure du tube (51) au voisinage de l'extrémité partiellement obstruée (53) est définie de façon à former un point d'arrêt fluide (55) des filets d'air et **en ce qu'**une pression d'air est mesurée au point d'arrêt fluide (55).

9. Sonde selon l'une des revendications précédentes, **caractérisée en ce qu'**elle comprend une embase (12) essentiellement formée d'une plaque et destinée à être fixée sur une surface externe (11) de l'aéronef et **en ce que** la sonde est configurée pour réaliser une mesure aérodynamique d'un écoulement d'air longeant l'embase (12).

## Patentansprüche

1. Sonde zum aerodynamischen Messen für den Einbau in ein Flugzeug, wobei die Sonde (10, 40, 50, 70) Folgendes umfasst: ein Rohr (18; 51), so ausgelegt, dass es einem Luftstrom entlang dem Flugzeug im Wesentlichen zugewandt ist, wobei das Rohr (18) an einem ersten (20) seiner Enden (20, 21; 53) offen ist, Mittel (30) zum Aussenden einer elektromagnetischen Welle, die in eine freie Zone (28) gerichtet ist, die sich in der Verlängerung des Rohrs (18; 51) auf der Seite des offenen Endes (20) befindet, wobei die elektromagnetische Welle das Erhitzen von Wasser zulässt, das dazu neigt, sich in der freien Zone (28) zu befinden, **dadurch gekennzeichnet, dass** die elektromagnetische Welle durch das Innere des Rohrs (18; 51) in die freie Zone (28) gerichtet wird.

2. Sonde nach Anspruch 1, **dadurch gekennzeichnet, dass** sie Temperaturmessmittel (41) umfasst.

3. Sonde nach einem der vorherigen Ansprüche, **dadurch gekennzeichnet, dass** sie Druckmessmittel (24) umfasst.

4. Sonde nach einem der vorherigen Ansprüche, **dadurch gekennzeichnet, dass** die elektromagnetische Welle ein Laserstrahl (36, 37, 38) ist.

5. Sonde nach Anspruch 4, **dadurch gekennzeichnet, dass** die Mittel zum Aussenden einer elektromagnetischen Welle eine den Laserstrahl (36, 37, 38) aussendende Laserdiode (30) und Fokussierungsmittel (34, 35; 52) des Laserstrahls (36, 37, 38) umfassen.

6. Sonde nach Anspruch 5, **dadurch gekennzeichnet, dass** die Diode (30) im Innern des Rohrs (18) angeordnet ist.

7. Sonde nach einem der Ansprüche 4 bis 6, **dadurch gekennzeichnet, dass** das Rohr (18) an einem zweiten (21) seiner Enden (20, 21) blockiert ist, und dadurch, dass die Fokussierungsmittel (34, 35) des Laserstrahls (36, 37, 38) einen konkaven Spiegel (35) umfassen, der in dem Rohr (18) angeordnet und am blockierten (21) Ende befestigt ist.

8. Sonde nach einem der Ansprüche 4 bis 6, **dadurch gekennzeichnet, dass** das Rohr (51) teilweise an einem zweiten (21) seiner Enden (20, 21) blockiert ist, dadurch, dass die Fokussierungsmittel (52) des Laserstrahls einen auf einer Achse (22) des Rohrs (51) zentrierten Körper bilden, dadurch, dass mehrere Luftstrahlen in dem Rohr (51) winkelmäßig um die Fokussierungsmittel (52) strömen können, dadurch, dass eine Innenform des Rohrs (51) in der Nähe des teilweise blockierten Endes (53) so definiert ist, dass ein Fluidanschlagpunkt (55) für Luftstrahlen gebildet wird, und dadurch, dass ein Luftdruck an dem Fluidanschlagpunkt (55) gemessen wird.

9. Sonde nach einem der vorherigen Ansprüche, **dadurch gekennzeichnet, dass** sie eine Basis (12) umfasst, die im Wesentlichen von einer Platte gebildet wird und zum Befestigen an einer Außenfläche (11) des Flugzeugs bestimmt ist, und dadurch, dass die Sonde zum Realisieren einer aerodynamischen Messung eines Luftstroms entlang der Basis (12) konfiguriert ist.

## Claims

1. An aerodynamic measurement probe intended to equip an aircraft, said probe (10, 40, 50, 70) comprising a tube (18; 51) intended to be substantially exposed to an airflow flowing along said aircraft, said tube (18) being open at a first end (20) of its ends (20, 21; 53), means (30) for emitting an electromagnetic wave directed towards a free area (28) located in the extension of said tube (18; 51) on the side of said open end (20), said electromagnetic wave allowing water likely to be found in said free area (28) to be heated, **characterised in that** said electromagnetic wave is directed towards said free area (28) through the inside of said tube (18; 51).

2. The probe according to claim 1, **characterised in that** it comprises temperature measurement means (41).

3. The probe according to any one of the preceding claims, **characterised in that** it comprises pressure measurement means (24).

4. The probe according to any one of the preceding claims, **characterised in that** said electromagnetic wave is a laser beam (36, 37, 38).

5. The probe according to claim 4, **characterised in that** said means for emitting an electromagnetic wave comprise a laser diode (30) emitting said laser beam (36, 37, 38) and means (34, 35; 52) for focusing said laser beam (36, 37, 38).

6. The probe according to claim 5, **characterised in that** said diode (30) is disposed inside said tube (18).

7. The probe according to any one of claims 4 to 6, **characterised in that** said tube (18) is blocked at a second end (21) of its ends (20, 21), and **in that** said means (34, 35) for focusing said laser beam (36, 37, 38) comprise a concave mirror (35) that is disposed inside said tube (18) and is attached to said blocked end (21).

8. The probe according to any one of claims 4 to 6, **characterised in that** said tube (51) is partially blocked at a second end (21) of its ends (20, 21), and **in that** said means (52) for focusing said laser beam form a body centred on an axis (22) of said tube (51), **in that** a plurality of air streams can angularly circulate inside said tube (51) about said focusing means (52), **in that** an internal shape of said tube (51) in the vicinity of the partially obstructed end (53) is defined so as to form a fluid stop point (55) for the air streams and **in that** an air pressure is measured at said fluid stop point (55).

9. The probe according to any one of the preceding claims, **characterised in that** it comprises a base (12) that is basically made up of a plate and is intended to be attached to an external surface (11) of said aircraft and **in that** said probe is configured to carry out an aerodynamic measurement of an airflow flowing along said base (12).
